Europäisches Patentamt

(19) European Patent Office

Office européen des brevets

(11) Publication number: **0 200 172 B1**

(12) **EUROPEAN PATENT SPECIFICATION**

(45) Date of publication of the patent specification:
**05.09.90**

(21) Application number: **86105725.5**

(22) Date of filing: **22.12.82**

(60) Publication number of the earlier application in accordance
with Art. 76 EPC: **0112414**

(51) Int. Cl.⁵: **G06F 15/72**

(54) **Image transformations on an interactive raster scan or matrix display.**

(43) Date of publication of application:
**10.12.86 Bulletin 86/45**

(45) Publication of the grant of the patent:
**05.09.90 Bulletin 90/36**

(84) Designated Contracting States:
**DE FR GB**

(56) References cited:
**IBM TECHNICAL DISCLOSURE BULLETIN, vol. 24, no. 4,
September 1981, pages 1998-2000, New York, US; D.F.
BANTZ et al.: "Multiple display processors"**

(73) Proprietor: **International Business Machines
Corporation, Old Orchard Road, Armonk, N.Y. 10504(US)**

(72) Inventor: **Cottrell, Roger Leslie Anderton,
724 Cambridge Avenue, Menlo Park
California, 94025(US)**
Inventor: **Murphy, Alan Stanley, 8 Malibres Road
Hiltingbury Chandler's Ford, Eastleigh, Hampshire
S05 1DG(GB)**

(74) Representative: **Bailey, Geoffrey Alan, IBM United
Kingdom Limited Intellectual Property Department
Hursley Park, Winchester Hampshire SO21 2JN(GB)**

**Description**

The invention relates to an interactive raster scanned or matrix display system of the type which permits two-way communication between a user of the system and a computer included as part of the system and is a divisional of our application EP-A 0 112 414.

In such systems, the computer provides the control for the display so that, for example, upon receipt of signals from an input device operated by the user, a displayed picture is modified appropriately. It is desirable for the modification to occur rapidly so that to the user it appears that the picture is changing instantaneously in response to the commands. The invention relates in particular to the use of such a display system for performing image transformation on the screen including such transformation made under the direct control of a user interacting with the system by means of a cursor positioning device.

There are a variety of graphical input devices such as joysticks, tracker balls, tablets etc. available by means of which a user can identify a particular location or image on the screen. It is also possible to identify a position on the screen by using a keyboard propelled cursor. Here, a set of four keys may be assigned to step the cursor in each of the two directions vertically and horizontally. The effectiveness of these input device depends on the use of visual feedback to the user provided by a cursor displayed at the screen coordinates defined by the coordinate outputs of the device. By controlling movement of the device, the user can steer the cursor around the screen.

In many interactive applications provision is made for displayed images on the screen to be transformed by the user. The procedure involved includes the user moving a cursor to overlay a point on the image in question and then issuing a signal by means of an assigned keybutton for example, to notify the computer that a transformation function is to be performed on the image, pointed to by the cursor. The computer then operates to link the image to the cursor so that, for example, if the transformation involves moving the image across the screen, the user can drag the image to its new position simply by moving the cursor with the input device. The images to be moved may include graphics line drawings, half-tone images, text or combinations of all three. A block of text to be moved may be identified by being enclosed in a box or by pointing to the start and end of the block using a cursor.

The cursor symbol on the screen can be provided by a special purpose hardware processor. However such a processor is a relatively expensive item in a low cost terminal and also limits the flexibility in terms of shape available to the user. It is therefore becoming increasingly common to generate the cursor by means of software thus enabling cursor shapes and sizes to be selected by the user to suit the application being performed.

A general interactive raster-scanned display system which is capable of making image transformations is described in SIGGRAPH- ACM Computer Graphics Vol.13, No.3, August 1979. Further information on such systems may be found in Chapter 12 "Raster Display Architecture" pages 479 to 503 in a text book entitled 'Fundamentals of Interactive Computer Graphics' by J D Foley and A Van Dam published by Addison-Wolsey Publications Company 1982. Basically in such systems, the individual graphics images that constitute the picture on the screen are stored as individual graphic segments containing the graphic orders. Then transformations may be applied individually to a given graphics segment. This in turn can result in a 'new frame' action, that is the redrawing if necessary of all visible retained information. On a raster-scanned or matrix (eg. gas panel) display, if there are many images visible and/or the images contain many vectors, it can take a relatively long time, amounting in some cases to several seconds, to redraw the entire picture.

This is particularly a problem on all but high function and consequently high cost systems. The problem in as much as it relates to moving the cursor itself across the screen can be minimised by specifying that it is of small size and simple shape so that it can be erased and redrawn repetitively at a sufficient rate to move it across the screen at the required speed. In the case of a key operated cursor this speed is determined by the automatic typing rate of the keyboard in repetitive mode.

It has been found however that when interacting with complex graphics line drawings such as integrated circuit layouts or detailed engineering drawings, a small cross-hair cursor for example can be difficult to find. Accordingly, when interacting with such complex images, it has been found to be advantageous to use a large cross-hair cursor extending from screen edge to screen edge both horizontally and vertically.

The processing power required to erase and redraw these large cursor images is not trivial and the time taken to perform each incremental repositioning can be long compared to the desired speed of interaction. Clearly, the problem is even worse when transforming detailed and complex images and worst of all when the transformations are performed under user control where both image and cursor are required to be moved across the screen together.

One approach proposed herein reduces the demands on the drawing engine of a display system is to arrange for the automatic substitution of an alternative image containing less detail to be drawn, for the full image during the period of image transformation. On completion of the transformation process the full image is once more displayed. Thus for example, a large cross-hair cursor on a screen would be automatically replaced by a small cross-hair cursor as soon as a user moves the cursor across the screen. Similarly a complex image would be replaced by an alternative image containing less detail to be drawn.

A similar technique to this, but for a different reason, is disclosed in an article entitled "Progressive Visibility Function for a Display Station Cursor" by M N Day in IBM Technical Disclosure Bulletin, Vol 25, No 2, July 1982, p 469. In this article a display system is described in which a small unobtrusive cursor, which is moved across the screen during keying operations, is replaced by a larger cursor which is more easily noted by the user when keying operations cease. The use of the alternative cursor shape in this application is solely for the benefit of the user and not to reduce the demands imposed on a drawing engine during transformation on otherwise complex image across the screen.

Another article entitled "Strategy for Fast Interaction with a Complex Display" by D F Bantz and R H Rickert in IBM Technical Disclosure Bulletin, Vol 24, No 2, July 1981, pp 1072/3/4 discloses a similar technique where simplified images replace more complex images to speed up the system response to a user. In this case, instead of displaying all the details of a complex character on the screen in response to a user's request, a simplified character such as basic outline is drawn so as to provide the user with a quick response. The details of the character are added later as a background task when there are no user requests pending.

A different approach to improving display performance is described in IBM Technical Disclosure Bulletin Vol 24, No 4, September 1981 pages 1998–2000. Here a system is described in which two display processors operating from the top and bottom of a display list can produce data for a bit-buffered raster device.

The present invention is concerned with the problems associated with transformation of an image on a screen where a drawing engine is not sufficiently powerful to erase and redraw the complex images at the rate demanded by the user controlling the transformation operation. The technique employed to overcome this problem optimises the performance of the drawing engine with the advantage that the user is shown the best possible image under the circumstances of use. Thus in accordance with the present invention, each complex image to be displayed and subsequently transformed on the screen in response to user interaction is stored as an order list of vectors, each of which is accessed in turn by the drawing engine during a subsequent drawing operation. The ordering of the vectors representing the complex image is important and is such that those vectors at the head of the list define the general shape, for example outline or skeleton of the image, so that these features of the image are the first to be drawn by the drawing engine. By this means, the engine draws as many vectors as it can in the time available between user interrupts. Since the vectors representing the general shape of the image are the first to be accessed by the engine, the image quickly becomes recognisable to the user. The details of the image are represented by the vectors further down the list and only are added if the drawing engine has sufficient time between user interrupts. The more time there is between interrupts, the more detail of the image is drawn. The full image is always reproduced on completion of the transformation operation or indeed at any time during the operation should the user interaction slow sufficiently to enable all vectors be drawn.

According to the invention, an interactive raster-scanned display system includes a microprocessor and random-access store operable to issue control signals to a drawing engine in order to display an image stored in said random access store as a vector display list on a display screen, said engine being operable in image transformation mode repetitively to erase and redraw such an image so as to change its position and/or shape in response to real-time commands received by said microprocessor from an interactive input device, characterised in that control means are provided operable in response to receipt by said microprocessor of each transformation command from the input device to issue an interrupt signal in order to cause said engine to erase the image currently on display and to commence to re-draw said image from said list incrementally transformed as required by said transformation command, the drawing operation continuing until receipt of a subsequent transformation command where upon the process is repeated, said vector display list being ordered by the user for selection by said engine during a drawing operation in a predetermined sequence of vectors, the arrangement being such that those vectors at the head of the list define the general shape of the image whereas those vectors at the end of the list define details of the image.

In order that the invention may be fully understood, a preferred embodiment thereof will now be described by way of example with reference to the accompanying drawings.

In the drawings:

Figure 1 shows in simplified block form a general purpose raster graphics display system to which the present invention is applied;

Figure 2 shows a number of typical images as they might appear on a screen during the performance of transformations in accordance with the invention;

Figure 3 shows a flow diagram in which the detail of the alternative image is selected automatically by the display system itself to suit the available processing power; and

Figure 4 shows a modification of the procedure set out in the flow diagram of Figure 3 to synchronise the operation with the frame frequency of the raster visual display unit of the system.

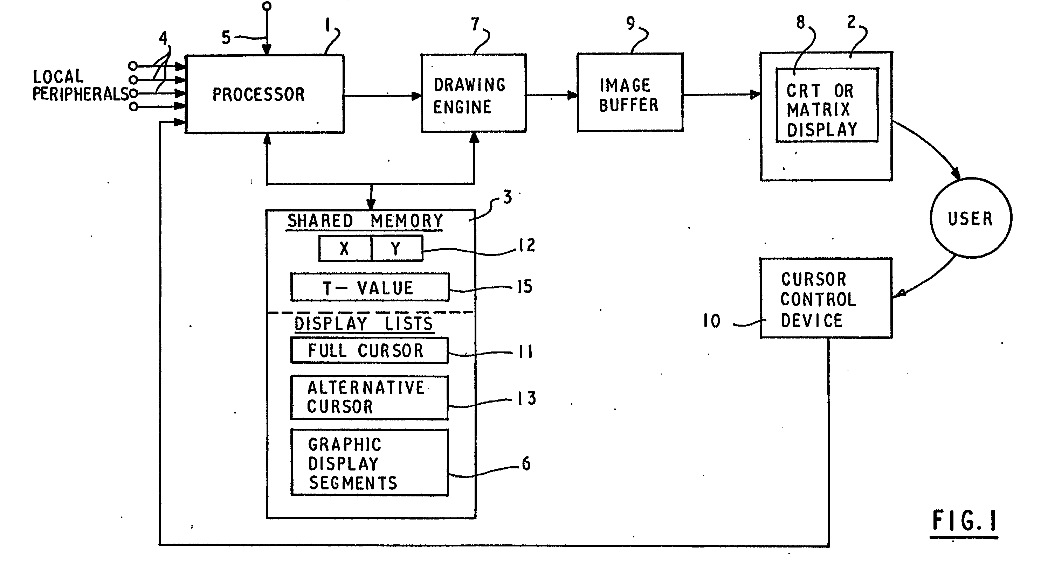

The basic structure of a general purpose graphics display system on which the present invention is implemented is shown in Figure 1. Such a system is well known in the art and is typical of the type of system described in the referenced chapter of the aforementioned text book by Foley and Van Dam. The basic components of a raster display system are an image creation system, an image storage system, and an image display system, all of which receive commands through an interface of a general purpose computer. Thus in the display system shown in Figure 1, a microprocessor 1 loads display lists of images to be displayed on a visual display unit (VDU) 2, into allocated space in a random access memory 3.

The display lists are in the form of graphic display segments and are provided in known manner by the "application" being run, over input lines 4 from local peripherals for example, or perhaps over a communications line 5 from a remote unit. The display lists of images are shown as having been allocated a block 6 of memory 3. It will be understood however that the allocation of space in such a system is under program control and the precise location of individual lists at any instant in time is of no interest. When a particular image is required to be displayed, the microprocessor points to the corresponding display list in block 6, and issues drawing commands to a drawing engine 7 which generates a bit map of the image to be displayed pel by pel on the screen 8. The bit map is loaded into an image refresh buffer 9 which is sampled row by row in synchronism with the line scan of the VDU2 so that the resulting image displayed on the screen 8 is refreshed at the required frame rate. The VDU may be either a cathode ray tube display device or a matrix addressed device such employing for example a gas panel.

In order to interact with the image on the screen, a user is provided with cursor control device 10 by means of which a cursor symbol can be moved from point to point over the screen. The cursor control device may take any of several forms for example a tablet, a trackball, joystick or indeed special purpose cursor keybuttons on a keyboard. In all cases, a means is provided, usually in the form of a button associated with the device, to enable a user to signal to the application program that the cursor symbol is at a position of interest on the screen. The cursor symbol may be provided by special hardware or, as is becoming increasingly common, in the form of a display list defining the cursor shape stored in allocated space in the image storage system. A full cursor display list is shown stored in block 11 in memory 3 and is displayed in the same way as other images by the drawing engine 7 generating a corresponding bit map of the cursor symbol which is loaded into the bit buffer 9 where it is held during display on the screen.

It is generally required that the cursor symbol is displayed on the screen at all times and for it to be superimposed on existing images already on display on the screen. Techniques for achieving this are well know in the art and, since they have no relevance to the present invention, will not be described herein. The mechanism for moving a cursor across the screen, although in itself well known, has some relevance to the present invention and will be now described briefly.

The cursor position on the screen is defined by coordinate values supplied by the associated cursor control device 10. The processor 1 enters these coordinate values into a predetermined region of memory 3 set aside for the purpose and for convenience identified as X and Y position registers 12. A stream of new coordinate values are sent to the microprocessor as a result of a repositioning of the cursor control device by an operator. In practice, a new coordinate value is transmitted following for example each incremental movement of the cursor control device or alternatively at predetermined time intervals determined by the system clock. The coordinate values arriving in succession form a queue in the microprocessor and are processed one at a time in the order in which they are received. The processing steps, which are quite standard, involve entering the new coordinate value from the head of the queue into the X, Y position registers 12 in memory 3, calculating the transformation using the standard linear transformation matrix for linear displacement, and sending commands to the drawing engine 7 to cause it to erase the cursor symbol at the current screen position and redraw it at the calculated pel positions specified by the new coordinate position defined by the contents of the X, Y position register. Provided the drawing engine is capable of erasing and redrawing the cursor symbol at a rate equal to or greater than the rate at which the new incremental position coordinates are received by the microprocessor, then it appears to the user, that the cursor symbol changes instantaneously in response to the cursor commands entered by means of the control device 10.

The cursor can be used interactively in conventional manner to identify positions on the screen at which new images are to be displayed, or to 'pick' and transform existing images on the screen. The techniques involved for performing these operations are well know in the art and involve repetitive erasure and redrawing not only the cursor symbol but also the image being transformed.

When interacting with complex images containing many lines, it is desirable to use a large cursor symbol extending from screen edge to screen edge so that it is easily identified and less likely to become lost. In low cost display systems with limited processing power, the process of erasing and redrawing such a cursor symbol can take a relatively long time compared with the rate at which the positioning information is received from the cursor control device. The effect is that requests for rapid cursor repositioning may not be met and the cursor movement lags behind the input device. This can result in overshoot and lead to general dissatisfaction of the user. When performing image transformation for example, dragging, scaling, rotation, or even more complex transformations such as rubber banding an image on a screen, the effect can be very much worse with each erasure and redrawing operation taking several seconds compared with a typical incremental move rate of a cursor which calls for fifty such operations a second. From the human factors point of view, it is important that the cursor remains easily identifiable and does not impede the interactive nature of the process by lagging behind its intended position. Also from the human factors point of view it would be a considerable advantage to be able to perform graphics or image transformation at the keying rate for example of a key controlled cursor.

The technique to overcome this problem according to the invention as described and claimed in our aforesaid application EP-A 0 112 414 from which this application is divided is to arrange during the period of transformation for the automatic substitution of an alternative image of a displayed object which contains less detail to be drawn for the full image and simultaneously for the full screen cross-hair cursor controlling the transformation operation to be replaced by a small cross-hair cursor which also consumes less processing power during movement. As soon as the transformation operation is seen to be complete, the full image of the object and the full screen cross-hair cursor are automatically redisplayed.

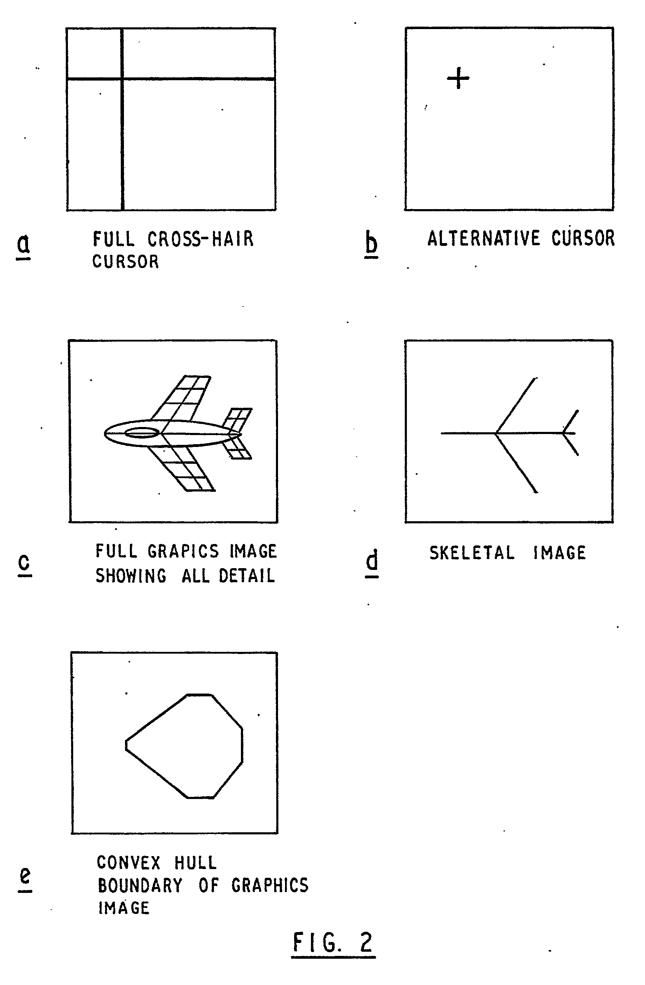

The technique for selecting the alternative cursor during the transformation mode is fully described in our aforesaid co-pending application. The two cursor images full and alternative such as shown in Figure 2 as screen a and b respectively may be chosen by the program itself, or they may be selected from images supplied by the user, or the application program. The alternative cursor is shown stored as a display list in block 13 of memory 3.

The same procedure is adopted for performing translations or other transformations of the displayed images provided by the application. Thus for example whenever a transformation is required of an image, which would by virtue of its complexity impose a time penalty on the operation, a simplified image is substituted during the period of transformation. When the transformation has been completed, the original complex image is returned. An example of a complex image is shown as screen c in Figure 2 and an alternative simple skeletal image for substitution during transformations is shown as screen d. Clearly the nature of the alternative image will be selected to suit each individual case and may take any of several forms. Another typical alternative image is shown in Figure 2 where screen e represent a convex hull boundary of a three dimensional object's image.

The disadvantage of the technique adopted to solve the problem in our co-pending application from which this application is divided is that the alternative images need to be provided beforehand by the application. The images are therefore invariant and accordingly are unlikely to be the most appropriate for each and every transformation. For example, with all but the key controlled cursor devices, the speed at which a cursor and its attached image are moved around the screen is determined by the user. If the movement is fast, even the alternative image may be too large for the drawing engine to process at the desired rate. Conversely, if the required rate of movement is slow, then even if the drawing engine is capable of processing the full image, the procedure will still automatically substitute the alternative image even though it may under the circumstances be unnecessary.

The technique employed according to the present invention utilises an interrupt system which overcomes this problem by enabling the system to specify its own alternative image by using only those vectors of the full image that can be drawn and erased in the available time interval between move commands. In this case, the display list of vectors presented for an image is ordered by the user so that the most important features of the image are specified, and hence drawn, first. Thus for example the ordering of the vectors forming the image on screen c of Figure 2 may be such that those vectors forming the skeletal image on screen d are drawn first should the rate of transformation be such that an alternative image is required.

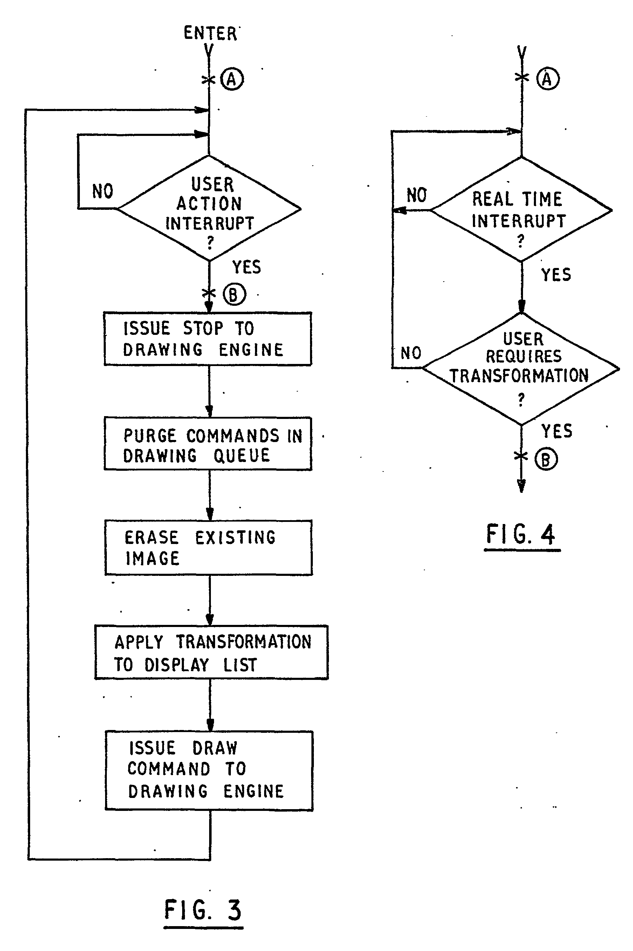

The flow diagram setting out the sequences of steps for performing image transformation operations with the system configured according to the present invention is shown in Figure 3.

Following receipt of a user action interrupt from the cursor control device 10, resulting in the appearance of a move request in the input queue, the microprocessor 1 issues a STOP command to the drawing engine 7. Since it is important to save as much time as possible, any remaining drawing commands on the drawing queue currently being processed by the drawing engine are purged from the system. An instruction is issued to the drawing engine to erase the existing image from the screen. The transformation specified by the new coordinate values in register 13 is applied to the display list and a new DRAW command is issued to the drawing engine 7. The engine then draws as many vectors as it can in the new incrementally transformed position until another move request appears in the input queue from device 10. This is regarded by the system as another user interrupt and the whole process is repeated.

It is desirable from the human factors point of view for drawing of an image on the screen to be synchronised with the frame scan mechanism. To achieve this, the display system is modified as shown by the part flow diagram shown in Figure 6 which replaces the portion of the flow diagram of Figure 5 lying between point A and B. In this variation, a system real time interrupt occurs at the start of every frame scan (i.e. 50 times/sec). At each interrupt, the input queue is interrogated to see whether there is any outstanding user action waiting to be processed. If a move request is found then the remaining procedure detailed in the flow chart of Figure 5 and described above is followed.

This mechanism tied to the frame synch of the terminal would result in difference alternative images being drawn on different speed terminals. However, it would not require the code for frame selection to be modified when it is transported to a new, different speed terminal, thus providing a degree of device independence.

## Claims

1. An interactive raster-scanned display system including a microprocessor (1) and random-access store (3) operable to issue control signals to a drawing engine (7) in order to display an image stored in said random access store as a vector display list on a display screen (8), said engine being operable in image transformation mode repetitively to erase and redraw such an image so as to change its position and/or shape in response to real-time commands received by said microprocessor from an interactive input device (10), characterised in that control means are provided operable in response to receipt by said microprocessor of each transformation command from the input device to issue an interrupt signal in order to cause said engine to erase the image currently on display and to commence to redraw said image from said list incrementally transformed as required by said transformation command, the drawing operation continuing until receipt of a subsequent transformation command where upon the process is repeated, said vector display list being ordered by the user for selection by said engine during a drawing operation in a predetermined sequence of vectors, the arrangement being such that those vectors at the head of the list define the general shape of the image whereas those vectors at the end of the list define details of the image.

2. An interactive raster-scanned display system as claimed in claim 1, including means for forming into a queue any multiple transformation commands from said input device received during an image processing operation by said engine and said control means being operable at the end of such a processing operation to cause said engine to commence to redraw said image as aforesaid transferred as required by the most recently received command in said queue.

3. An interactive raster-scanned display system as claimed in claim 2, in which start of an image draw operation by said engine is synchronised with the start of a new frame scan of said display screen.

## Patentansprüche

1. Interaktives Anzeigesystem mit Rasterabtastung mit einem Mikroprozessor (1) und einem RAM-Speicher (3), das betrieben werden kann, um Steuersignale an einen Zeichenmotor (7) auszugeben, um ein in besagtem RAM-Speicher abgelegtes Bild als Vektoranzeigeliste auf einem Anzeigebildschirm (8) anzuzeigen, wobei besagter Motor in Betriebsart Bildänderung wiederholt verwendet werden kann, um das Bild zu löschen und wieder zu zeichnen, um seine Position und/oder Form in Antwort auf Realzeitbefehle zu ändern, die von besagtem Mikroprozessor von einer interaktiven Eingabevorrichtung (10) empfangen werden, dadurch gekennzeichnet, daß besagte Vektoranzeigeliste, um die Anforderungen an den Zeichenmotor während der Umwandlung des Bildes in Realzeit zu reduzieren, für die Auswahl eines Zeichenvorgangs in einer vorgegebenen Vektorsequenz durch besagten Motor geordnet wird, wobei die Anordnung so vorgenommen wird, daß die Vektoren an der Spitze der Liste die allgemeine Form des Bildes vorgeben, während die Vektoren am Ende der Liste Details des Bildes definieren, und Steuermittel vorgesehen sind, die in Antwort auf den Empfang eines jeden Umwandlungsbefehls von der Eingabevorrichtung durch besagten Mikroprozessor eingesetzt werden können, um den besagten Motor zu veranlassen, das gerade auf dem Bildschirm angezeigte Bild zu löschen und zu beginnen, das besagte Bild aus der besagten geordneten Liste neu zu zeichnen, das schrittweise wie gewünscht durch den besagten Umwandlungsbefehl umgewandelt wurde, wobei der Zeichenvorgang bis zum Empfang eines spätern Um-

wandlungsbefehls fortgesetzt wird, worauf der Vorgang wiederholt wird.

2. Interaktives Anzeigesystem mit Rasterabtastung gemäß Anspruch 1, mit Mitteln für die Einreihung vielfacher Umwandlungsbefehle, die von besagter Eingabevorrichtung während eines Bildverarbeitungsvorgangs vom besagten Motor empfangen wurden, in eine Warteschlange, wobei besagte Steuermittel am Ende eines solchen Verarbeitungsvorgangs verwendet werden können, um besagten Motor zu veranlassen, das besagte Bild wieder zu zeichnen, wie oben gesagt, übertragen wie vom zuletzt empfangenen Befehl in der besagten Warteschlange angefordert.

3. Interaktives Anzeigesystem mit Rasterabtastung gemäß Anspruch 2, in dem der Beginn eines Bildzeichnungsvorgangs durch den besagten Motor mit dem Beginn einer neuen Rahmenabtastung des besagten Bildschirms synchronisiert ist.

## Revendications

1. Un système d'affichage interactif à balayage de trame, comprenant un microprocesseur (1) et une mémoire vive (3) pouvant être actionnés de manière à délivrer à un générateur de traçage (7) des signaux de commande afin d'afficher sur un écran d'affichage (8) une image mémorisée dans la mémoire vive sous forme d'une liste d'affichage de vecteurs, ce générateur de traçage pouvant être actionné en un mode de transformation d'image de façon répétée pour effacer et redessiner une telle image afin de modifier sa position et/ou sa forme en réponse à des ordres en temps réel reçus par le microprocesseur en provenance d'un organe d'entrée interactif (10), caractérisé en ce que, pour réduire les contraintes imposées au générateur de traçage lors d'une transformation d'image en temps réel, ladite liste d'affichage de vecteurs est ordonnée, pour permettre la sélection par le générateur de traçage lors d'une opération de traçage, selon une séquence prédéterminée de vecteurs, la configuration étant telle que ceux des vecteurs qui se trouvent en tête de liste définissent la forme générale de l'image tandis que ceux des vecteurs qui se trouvent en queue de liste définissent des détails de l'image, et en ce qu'il est prévu des moyens de contrôle pouvant être actionnés en réponse à la réception par le microprocesseur de chaque ordre de transformation en provenance de l'organe d'entrée de manière à faire effacer l'image en cours d'affichage et commencer à redessiner cette image par le générateur de traçage à partir de la liste ordonnée, transformée de façon incrémentale de la manière requise par l'ordre de transformation, l'opération de traçage continuant jusqu'à réception d'un ordre de transformation ultérieur, auquel cas on répète le processus.

2. Le système d'affichage interactif à balayage de trame de la revendication 1, comprenant des moyens pour organiser en une file d'attente tous les ordres de transformations multiples provenant de l'organe d'entrée reçus lors d'une opération de traitement d'image par le générateur de traçage, lesdits moyens de commande pouvant être actionnés à la fin d'une telle opération de traitement de manière à faire redessiner l'image ainsi transférée par le générateur de traçage de la façon requise par l'ordre de ladite file d'attente reçu en dernier lieu.

3. Le système d'affichage interactif à balayage de trame de la revendication 2, dans lequel le début de l'opération de traçage d'image par le générateur de traçage est synchronisée sur le début d'un nouveau balayage de trame de l'écran d'affichage.

FIG. I

EP 0 200 172 B1

a  FULL CROSS-HAIR
   CURSOR

b  ALTERNATIVE CURSOR

c  FULL GRAPICS IMAGE
   SHOWING ALL DETAIL

d  SKELETAL IMAGE

e  CONVEX HULL
   BOUNDARY OF GRAPHICS
   IMAGE

FIG. 2

FIG. 3

FIG. 4